# EUROPÄISCHE PATENTANMELDUNG

(11) **EP 0 915 280 A2**
(43) Veröffentlichungstag der Anmeldung: **12.05.1999**
(21) Anmeldenummer: 98120385.4
(22) Anmeldetag: 28.10.1998
(51) Int. Cl.: F16L 13/14

(54) **Pressverbindung**

(30) Priorität: 04.11.1997 DE 19748623
(71) Anmelder: HENCO Industries NV, 2200 Herentals (BE)
(72) Erfinder: Hendrickx, Willy, 2200 Herentals (BE)
(74) Vertreter: Starke, Günter Dipl.-Ing.

(57) **Zusammenfassung**

Rohrverbindungseinrichtung mit Rohrträger (3) und Bund (1) die einstßckig aus Kunststoff gefertigt sind. Einerseits ist eine Korrosion mit den Metalbestandteilen des Rohres (7) ausgeschlossen und andererseits ist die Rohrverbindungseinrichtung, da nur noch aus zwei Teilen bestehend, preiswert herstellbar. Der innere Rohrträger (3) kann beispielsweise in einem Spritzgießverfahren hergestellt sein, so daß keinerlei Nachbearbeitung erforderlich ist. Der Bund (1) weist dabei vorteilhaft einen solchen Durchmesser auf, daß die Preßhülse (4) direkt auf den Bund (1) aufgeschoben und mit einer Clipsvorrichtung befestigt werden kann.

## Beschreibung

Die Erfindung betrifft eine Rohrverbindungseinrichtung zum Verbinden mit zumindest einem aus verpreßbaren Material bestehenden Rohr, insbesondere einem Kunststoff-Metall-Kunststoff-Verbundrohr, durch das eine Flüssigkeit leitbar ist, wobei die Rohrverbindungseinrichtung zumindest einen Grundkörper mit einem Anschlußbereich für eine Preßverbindung mit dem Rohr aufweist und der Anschlußbereich zumindest einen inneren Rohrträger mit einem Bund, eine Preßhülse und eine Kontrolleinrichtung zur Lagekontrolle des auf den inneren Rohrträger bis in den Bereich einer dem Rohrende zugewandten Bundseitenwand aufgeschobenen und von der Preßhülse umgebenen Rohrendes aufweist.

Eine derartige gattungsgemäße Rohrverbindungseinrichtung ist aus dem DE-GM 295 15 269 bekannt. Dabei ist der innere Rohrträger aus AMETAL oder einer Messinglegierung gefertigt und weist einen im wesentlichen gleichmäßigen Durchmesser über die gesamte Länge auf. Der Bund wird als gesondertes Teil aus Kunststoff hergestellt und auf dem inneren Rohrträger befestigt, wobei an dem Bund eine Preßhülse befestigbar ist. Die Lage des aufzuschiebenden Rohres ist durch eine Kontrolleinrichtung an der Preßhülse überprüfbar. Diese Rohrverbindungseinrichtung soll preiswert herzustellen sein und einen sicheren Schutz gegen elektrolytische Korrosion gewährleisten.

Eine im Prinzip sehr ähnliche Ausbildung ist aus der US-PS 3,549,180 bekannt. Hier ist auf den inneren Rohrträger eine Dichtungs- und Isolierungseinrichtung aufgesetzt und bildet den Teil des Bundes, gegen den das aufzuschiebende Rohr anliegt. Über die Dichtungs- und Isolierungseinrichtung hinwegragend ist eine Preßhülse auf einen zweiten von dem inneren Rohrträger gebildeten Bundteil aufgesetzt. Die Lage des aufzuschiebenden Rohres ist auch hier durch zumindest eine Kontrolleinrichtung an der Hülse überprüfbar. Beide Ausbildungen lösen zufriedenstellend den Aufgabenteil des Korrosionsschutzes, es sind aber in beiden Fällen noch mehrere Arbeitsschritte zur Herstellung des inneren Rohrträgers mit dem Bund und gegebenenfalls der Festlegung der Preßhülse auf dem Bund erforderlich.

Der Erfindung liegt die Aufgabe zugrunde, eine Rohrverbindungseinrichtung bereitzustellen, bei der eine Korrosion der zusammenzusetzenden Teile ausgeschlossen und die dabei aus wenigen Teilen preiswert herstellbar ist.

Diese Aufgabe wird dadurch gelöst, daß
a) der innere Rohrträger und der Bund einstückig gefertigt sind und
b) das Material ein Kunststoffwerkstoff ist.

Durch die einstückige Fertigung von Rohrträger und Bund unter Verwendung von Kunststoffwerkstoff werden beide Aufgabenteile optimal gelöst. Einerseits ist eine Korrosion mit den Metalbestandteilen des Rohres ausgeschlossen und andererseits ist die Rohrverbindungseinrichtung, da nur noch aus zwei Teilen bestehend, preiswert herstellbar. Der innere Rohrträger kann beispielsweise in einem Spritzgießverfahren hergestellt sein, so daß keinerlei Nachbearbeitung erforderlich ist. Der Bund weist dabei vorteilhaft einen solchen Durchmesser auf, daß die Preßhülse direkt auf den Bund aufgeschoben werden kann.

In Weiterbildung der Erfindung kommen als Material für den Kunststoffwerkstoff sogenannte Polysulfone, beispielsweise UDEL P-1700 NT 11970217 oder UDEL GF-120 NT ZV 1003 oder auch sogenannte Polyphenylsulfone, beispielsweise RADEL R 5000 NT M 97068 T oder gegebenenfalls eine Kombination davon in Frage. Diese Werkstoffe erfüllen alle Anforderungen, die bezüglich der Festigkeit, der Dauerhaltbarkeit und sonstiger Verordnungen im Sanitärbereich gestellt sind.

In Weiterbildung der Erfindung ist die Preßhülse aus Edelstahl gefertigt. Hier sind grundsätzlich auch andere nicht korrodierende Werkstoffe geeignet, Edelstahl hat sich aber als besonders vorteilhaft erwiesen.

Weiterhin ist die Preßhülse mit einem Befestigungsende auf den Bund aufschiebbar und mit dem Befestigungsende gegen einen von dem Bund auskragenden Anschlag anschiebbar. Dadurch ist, wie schon zuvor angedeutet, kein Spezialwerkzeug beim Aufschieben (Preßvorrichtung) erforderlich und es ist durch den Anschlag eine genaue Positionierung der Preßhülse gewährleistet.

Dabei ist in weiterer Ausgestaltung vorgesehen, die Preßhülse in geeigneter Weise auf dem Bund festzuclipsen. Dies ist wegen der zulässigen Durchmessertoleranzen von dem Grundkörper mit insbesondere dem Bund einerseits und der Preßhülse andererseits sinnvoll. Durch die Clipsverbindung ist in jedem Fall ein sicherer, unverlierbarer Halt der Preßhülse auf dem Grundkörper (im Montagerohzustand) gewährleistet. Zur Erzeugung der Clipsverbindung weist der Bund beabstandet von dem Anschlag eine Rampe auf, über die die Preßhülse mit einem endseitigen Haltevorsprung hinwegschiebbar ist. Dieser Haltevorsprung ist in geeigneter Weise durch eine mechanische Verformung der Preßhülse oder aber auch durch einen eingesetzten Haltering beispielsweise aus einem Kunststoffwerkstoff herstellbar.

In weiterer Ausgestaltung ist die Kontrolleinrichtung eine in die Preßhülse eingelassene Kontrollöffnung, die in weiterer Ausgestaltung seitlich beabstandet zu dem Preßbereich in der Preßhülse angeordnet ist. Diese Einrichtung beziehungsweise Öffnung ist als beliebig geformtes Loch oder auch als ggf. bis zu dem auf dem Bund aufliegenden Ende der Preßhülse geführter Schlitz ausgebildet. Die Öffnung liegt so bezogen zu dem einzuschiebenden Rohrende, daß das Rohrende die als Loch ausgebildete Öffnung vorzugsweise ganz, die als Schlitz ausgebildete Öffnung in einem Endbereich von innen bedeckt. Dadurch ist jederzeit eine gezielte Kontrolle des aufgeschobenen Rohrendes möglich. Im übrigen können mehrere Kontrollöffnungen auf den Umfang der Preßhülse verteilt angeordnet sein.

Dadurch, daß der Rohrträger aus einem Kunststoffwerkstoff gefertigt ist, kann die Kontrolleinrichtung durch den zumindest teilweise durchsichtig ausgebildeten Bund gebildet werden. Hierbei ist es im Rahmen der Erfindung vorgesehen, den Rohrträger insgesamt durchsichtig auszugestalten, es ist aber auch beispielsweise durch Extrudieren von verschiedenen Kunststoffwerkstoffen möglich, nur den Bund gegebenenfalls in Teilbereichen durchsichtig zu gestalten. Hierzu können auch andere Kunststoffwerkstoffe als zuvor angegeben verwendet werden.

In weiterer Ausgestaltung der Erfindung weist die Preßhülse eine eingeformte, nach außen weisende Ringbördelung insbesondere im Bereich eines Endes auf. Diese Ringbördelung wirkt bei der Herstellung der Preßverbindung mit einer in weiterer Ausgestaltung vorgesehenen Zentriernut von Preßbacken zusammen, die auf die Preßhülse aufsetzbar sind. Dadurch ist eine lagerichtige Anordnung der Preßbacken auf der Preßhülse sichergestellt und die Preßringabsätze der Preßbacken pressen die Preßhülse immer an genau definierten Stellen auf das Rohr bzw. das Rohr auf den darunterliegenden inneren Rohrträger. Dies erfolgt im übrigen im Bereich einer später erläuterten Verzahnung des Rohrträgers. Wie gesagt bildet die Ringbördelung vorzugsweise ein Ende der Preßhülse, vorzugsweise das von dem Bund wegweisende Ende und weist genau in diesem Endbereich einen größeren Durchmesser als die übrige Preßhülse auf. Dadurch ergibt sich in diesem Bereich zwischen der Preßhülse bzw. dem Ende der Ringbördelung und dem Rohr ein Ringspalt. Durch das Vorhandensein dieses Ringspaltes ist gewährleistet, daß das Rohr bei direkt in diesem Bereich angebrachten Biegungen unter keinen Umständen an der Preßhülse scheuert und hier Beschädigungen auftreten. Denkbar ist auch die Ringbördelung durch einen auf die Preßhülse aufgesetzten Ring beispielsweise aus einem Kunststoffwerkstoff zu bilden. Dann braucht die Preßhülse mechanisch nicht mehr bearbeitet zu werden und nur von einem Rohr abgelängt zu werden. Schließlich ist es im Rahmen der Erfindung auch vorgesehen, alternativ zu der Ringbördelung auf dem Bund einen mit der Zentriernut zusammenwirkenden Bereich vorzusehen. Hierfür kann der ohnehin vorhandene Anschlag für die Preßhülse entsprechend ausgebildet sein. Dadurch ist eine weitere Vereinfachung erreichbar.

In Weiterbildung ist in den inneren Rohrträger zumindest eine Ringnut eingearbeitet, die in dem Bereich neben dem Bund angeordnet ist. In diese Ringnut wird ein Runddichtring einfügt, der zur zuverlässigen Abdichtung des aufgeschobenen Rohres beiträgt.

Weiterhin ist vorgesehen, daß zur Anpassung an verschiedene Rohrinnendurchmesser der Innendurchmesser der Rohrverbindungseinrichtung einen Übergangsbereich aufweist. Hierzu ist für einen kontinuierlichen Übergang insbesondere ein konischer Übergang über eine Teillänge der Rohrverbindungseinrichtung vorgesehen.

In weiterer Ausgestaltung der Erfindung ist in den inneren Rohrträger eine zu dem Bund ausgerichtete Verzahnung eingearbeitet. Diese Verzahnung, die aus mehreren hintereinander aufgereihten oder ineinander übergehenden (schraubenförmigen) Verzahnungsreihen besteht, bewirkt, daß das auf den inneren Rohrträger aufgeschobene Rohr auch schon ohne Preßverbindung der Hülse sicher auf dem inneren Rohrträger hält. Dabei ist die Verzahnung normalerweise so ausgebildet, daß eine Beschädigung des inneren Kunststoffmantels beziehungsweise der Beschichtung des Grundkörpers des Rohres bis auf den Grundkörper ausgeschlossen ist. Selbst wenn dies aber vorkommen sollte, ist dies im Gegensatz zu bekannten Ausbildungen unkritisch, da keine korrodierenden Materialien aneinanderkommen können.

In weiterer Ausgestaltung der Erfindung sind beidseitig an den Bund innere Rohrträger anformbar, der Bund kann als Dreieckstück ausgebildet sein, an das drei innere Rohrträger angeformt sind oder aber an den Bund kann auch beispielsweise ein Gewindeanschlußstück, ein Eckanschluß, ein Flanschanschlußstück oder ein sonstiges Anschlußstück angeformt sein. Mit anderen Worten ist die erfindungsgemäße Rohrverbindung für alle Bereiche der Installationstechnik, insbesondere der Sanitärinstallation und der Heizungsinstallation, verwendbar. Dabei weist der Bund im übrigen eine solche Breite auf, daß die Peßhülsen immer unverändert zum Beispiel bei der Doppelrohrverbindung aufgesetzt werden können. Somit können immer die gleichen Preßbacken verwendet werden. Bevorzugt werden zwei Preßbacken verwendet, die zusammenwirkend für den Preßvorgang eingesetzt werden. Die Rohrverbindung kann im übrigen für beliebige Rohrdurchmesser ausgelegt sein.

Der Verbindungsvorgang eines Rohres mit einer Rohrverbindung erfolgt in den folgenden Arbeitsschritten, Auf- beziehungsweise Einschieben des Rohres auf den inneren Rohrträger beziehungsweise in die Preßhülse bis zur Anlage an den Bund, was durch die Kontrolleinrichtung überprüfbar ist; Einlegen der so vorbereiteten Rohrverbindung in das Preßwerkzeug, bestehend aus zwei Preßbacken und Verpreßen der Rohrverbindung wie beschrieben.

Weitere vorteilhafte Ausgestaltungen der Erfindung sind der Zeichnungsbeschreibung zu entnehmen, in der in den Figuren dargestellte Ausführungsbeispiele der Erfindung näher beschrieben sind.

Es zeigen:
- Fig. 1: eine Rohrverbindungseinrichtung mit einem inneren Rohrträger ohne Ringnut,
- Fig. 1a: eine Detailansicht des Bundes,
- Fig. 2: eine Rohrverbindungseinrichtung mit einem inneren Rohrträger mit Ringnut und
- Fig. 3: einen Grundkörper mit Gewindeanschlußstück und sich verjüngendem Innendurchmesser

Die erfindungsgemäße Rohrverbindungseinrichtung weist gemäß beiden Figuren einen Grundkörper mit beidseitig an einen Bund 1 angeformte Anschlußbereiche 2 mit inneren Rohrträgern 3 auf. Auf der linken Seite, also dem inneren Rohrträger 3, ist die Rohrverbindungseinrichtung im Montagezustand vor dem Verpressen der Preßhülse 4 im geschnittenen und ungeschnittenen Zustand dargestellt, während auf der rechten Seite der Montagezustand nach der Verpreßung der Preßhülse 4 dargestellt ist. Im oberen Bereich ist wiederum ein Schnitt dargestellt, wobei hier zusätzlich eine Preßbacke 5 auf die Preßhülse 4 aufgesetzt ist und im gegenüberliegenden unteren Bereich ist die fertig verpreßte Rohrverbindung ungeschnitten dargestellt.

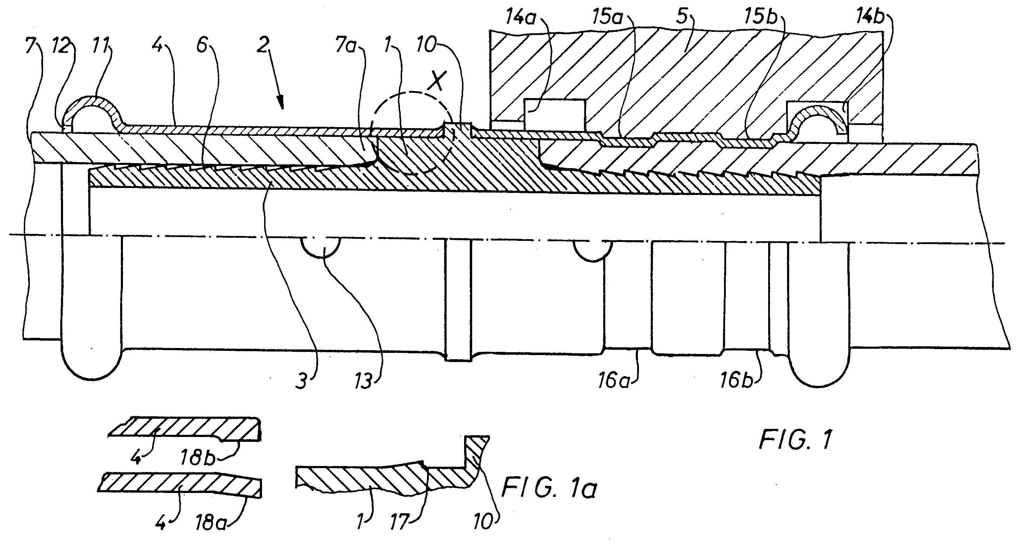

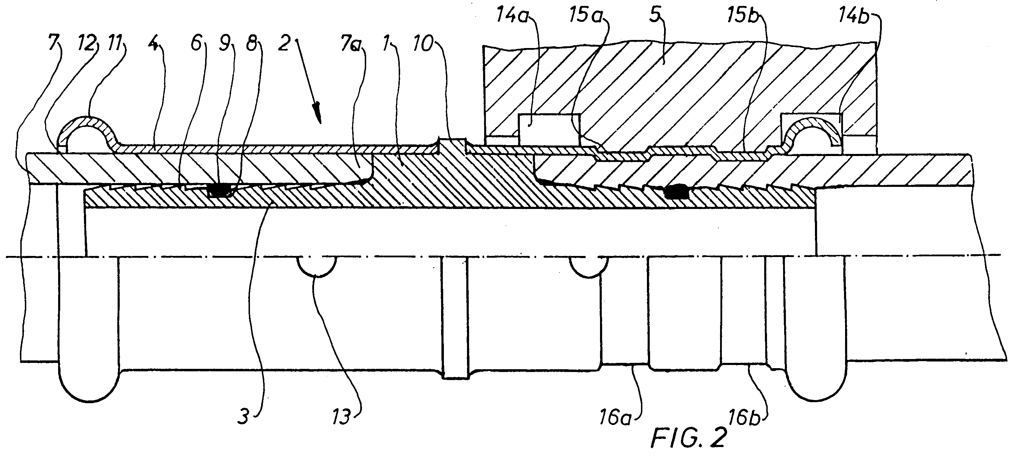

Wie schon gesagt, schließt sich in den dargestellten Ausführungsbeispielen an einen Bund 1 beidseitig ein innerer Rohrträger 3 an. Bei einem an den Bund 1 einseitig angeformten sonstigen Anschlußstück hat der Bund 1 eine entsprechend angepaßte Breite. Der innere Rohrträger 4 weist nach Figur 1 eine durchgehende Verzahnung 6 mit insgesamt neun Verzahnungsreihen auf, während nach Fig. 2 die Verzahnung 6 nach der dritten Verzahnungsreihe eine umlaufende Ringnut 8 zur Aufnahme eines Runddichtringes 9 aufweist. Anschließend an die Ringnut 8 folgen weitere vier Verzahnungsreihen. Besonders wichtig sind bei dieser Ausbildung für den sicheren und beschädigungsfreien Halt des Rohres 7 die ersten drei Verzahnungsreihen. Die Verzahnung 6 ist zu dem Bund 1 hin ausgerichtet und bildet somit Widerhaken für ein auf den inneren Rohrträger 3 bzw. die Verzahnung 6 aufzuschiebendes Rohrende 7a eines Rohres 7.

Auf den Bund 1 ist die Preßhülse 4 anliegend an einen von dem Bund 1 auskragenden Anschlag 10 aufgeschoben. Zur unverlierbaren Festlegung der Preßhülse 4 weist der Bund 1 bei Bedarf beabstandet von dem Anschlag 10 eine Rampe 17 (Fig. 1a) auf, über die die Preßhülse 4 mit einem endseitigen Haltevorsprung 18a, 18b hinwegschiebbar ist. Der Haltevorsprung 18a, 18b kann beispielsweise in den dargestellten Ausführungen a, b hergestellt sein; also in Form einer Abkantung oder einer Querschnittsverengung durch einen Quetschvorgang. Die Preßhülse 4 reicht bis über das Ende des inneren Rohrträgers 3 hinaus und weist in diesem Endbereich eine umlaufende Ringbördelung 11 auf, die in dem Endbereich einen Ringspalt 12 mit dem Rohr 7 bildet. Durch diesen Ringspalt 12 ist sichergestellt, daß das Rohr 7, auch wenn es direkt hinter dem Ende des inneren Rohrträgers 3 gebogen ist, nicht an der Preßhülse 4 scheuert. Weiterhin ist in die Preßhülse 4 eine Kontrollöffnung 13 eingelassen, die sich an den auf den Bund 1 aufgeschobenen Bereich der Preßhülse 4 anschließt. Durch die Kontrollöffnung 13 ist jederzeit eine Sichtkontrolle des Rohrendes 7a möglich und somit der korrekte Sitz auf dem inneren Rohrträger 3 nachprüfbar.

Die Preßbacke 5 weist einen Grundkörper auf, in den zwei Zentriernuten 14a, 14b eingelassen, von denen immer eine mit einer Ringbördelung 11 zusammenwirkt und somit eine Führung für die Preßbacke 5 bildet. An den Grundkörper der Preßbacke 5 sind weiterhin zwei Preßringabsätze 15a, 15b angeformt, die gegebenenfalls die Ringnut 8 einschließen (Figur 2) und im Bereich der Verzahnung 6 mit mehreren Verzahnungsreihen auf die Preßhülse 4 einwirken. Diese Preßringabsätze 15a, 15b pressen die Preßhülse 4 während des Preßvorgangs auf das Rohr 7 bzw. den inneren Rohrträger 3, so daß nach dem Preßvorgang hier umlaufende Preßvertiefungen 16a, 16b auf der Preßhülse verbleiben.

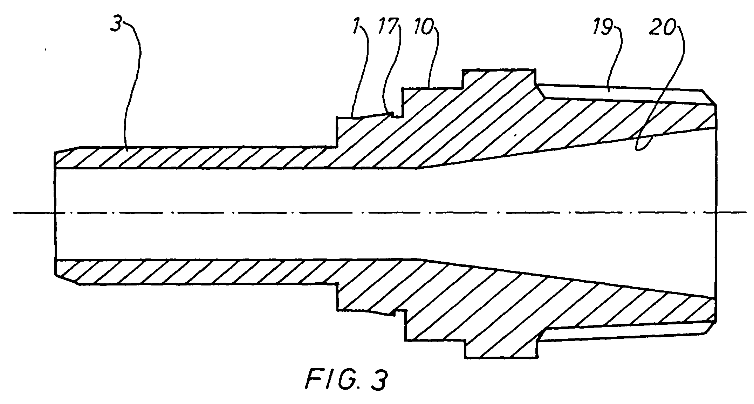

In Fig. 3 ist ein Grundkörper mit einem einseitig an den Bund 1 angeformten inneren Rohrträger 3 und gegenüberliegend an den Bund 1 angeformten Gewindeanschlußstück 19 dargestellt. Der Innendurchmesser verjüngt sich in Form eines Konus 20 von dem Gewindeanschlußstück 19 bis in den Bereich des Bundes 1 und bleibt von dort an konstant. Diese Veränderung des Innendurchmessers ist bei allen denkbaren Ausführungen der Rohrverbindungseinrichtung anwendbar.

## Patentansprüche

1. Rohrverbindungseinrichtung zum Verbinden mit zumindest einem aus verpreßbaren Material bestehenden Rohr, insbesondere einem Kunststoff-Metall-Kunststoff-Verbundrohr, durch das eine Flüssigkeit leitbar ist, wobei die Rohrverbindungseinrichtung zumindest einen Grundkörper mit einem Anschlußbereich für eine Preßverbindung mit dem Rohr aufweist und der Anschlußbereich zumindest einen inneren Rohrträger mit einem Bund, eine Preßhülse und eine Kontrolleinrichtung zur Lagekontrolle des auf den inneren Rohrträger bis in den Bereich einer dem Rohrende zugewandten Bundseitenwand aufgeschobenen und von der Preßhülse umgebenen Rohrendes aufweist,
*dadurch gekennzeichnet,* daß
a) der innere Rohrträger (3) und der Bund (1) einstückig gefertigt sind und
b) das Material ein Kunststoffwerkstoff ist.

2. Rohrverbindungseinrichtung nach Anspruch 1,
*dadurch gekennzeichnet,* daß das Material ein Polysulfon, wie beispielsweise UDEL P-1700 NT 11970217 oder UDEL GF-120 NT ZV 1003, ein Polyphenylsulfon wie beispielsweise RADEL R 5000 NT M 97068 T oder eine Kombination davon ist.

3. Rohrverbindungseinrichtung nach Anspruch 1 oder 2,
*dadurch gekennzeichnet,* daß die Preßhülse (4) aus Edelstahl gefertigt ist.

4. Rohrverbindungseinrichtung nach einem der vorherigen Ansprüche,
*dadurch gekennzeichnet,* daß die Preßhülse (4) mit einem Befestigungsende auf den Bund (1) aufschiebbar und mit dem Befestigungsende gegen einen von dem Bund (1) auskragenden Anschlag (10) anschiebbar ist.

5. Rohrverbindungseinrichtung nach einem der vorherigen Ansprüche,
*dadurch gekennzeichnet,* daß die Preßhülse (4) auf den Bund (1) aufclipsbar ist.

6. Rohrverbindungseinrichtung nach einem der vorherigen Ansprüche,
*dadurch gekennzeichnet,* daß die Kontrolleinrichtung eine in die Preßhülse (4) eingelassene Kontrollöffnung (13) ist.

7. Rohrverbindungseinrichtung nach Anspruch 6,
*dadurch gekennzeichnet,* daß die Kontrollöffnung (13) seitlich beabstandet zu dem Bund (1) in der Preßhülse (4) angeordnet ist.

8. Rohrverbindungseinrichtung nach einem der Ansprüche 1 bis 5,
dadurch gekennzeichnet, daß die Kontrolleinrichtung durch den zumindest teilweise durchsichtig ausgebildeten Bund (1) gebildet ist.

9. Rohrverbindungseinrichtung nach einem der vorherigen Ansprüche,
*dadurch gekennzeichnet,* daß die Preßhülse (4) eine eingeformte, nach außen weisende Ringbördelung (11) aufweist.

10. Rohrverbindungseinrichtung nach Anspruch 9,
*dadurch gekennzeichnet,* daß die Ringbördelung (11) ein Ende der Preßhülse (4) bildet und vorzugsweise in dem Endbereich einen größeren Durchmesser als die Preßhülse (4) aufweist.

11. Rohrverbindungseinrichtung nach einem der vorherigen Ansprüche,
*dadurch gekennzeichnet,* daß in den inneren Rohrträger (3) zumindest eine Ringnut (8) eingearbeitet ist, die im Bereich neben dem Bund (1) angeordnet ist.

12. Rohrverbindungseinrichtung nach einem der vorherigen Ansprüche,
*dadurch gekennzeichnet,* daß in den inneren Rohrträger (3) eine zu dem Bund (1) ausgerichtete Verzahnung (6) eingearbeitet ist.

13. Rohrverbindungseinrichtung nach einem der vorherigen Ansprüche,
*dadurch gekennzeichnet,* daß der Innendurchmesser der Rohrverbindung sich zumindest in einem Teilbereich entlang der Rohrverbindung verändert.

14. Rohrverbindungseinrichtung nach einem der vorherigen Ansprüche,
*dadurch gekennzeichnet,* daß an den Bund (1) beidseitig innere Rohrträger (3) angeformt sind.

15. Rohrverbindungseinrichtung nach einem der vorherigen Ansprüche,
*dadurch gekennzeichnet,* daß der Bund (1) als Dreieckstück ausgebildet ist, an das drei innere Rohrträger (3) angeformt sind.

16. Rohrverbindungseinrichtung nach einem der vorherigen Ansprüche,
*dadurch gekennzeichnet,* daß an den Bund (1) ein Gewindeanschlußstück, ein Eckanschluß, ein Flanschanschlußstück oder ein sonstiges Anschlußstück angeformt ist.

17. Rohrverbindungseinrichtung nach einem der vorherigen Ansprüche,
*dadurch gekennzeichnet,* daß auf die Preßhülse (3) zumindest zwei Preßbacken (5) aufsetzbar sind, die zusammenwirkend mit der Ringbördelung (11) eine Zentriernut (14a, 14b) und darüber hinaus zwei Preßringabsätze (15a, 15b) aufweisen, die im Bereich der Verzahnung (6) liegen.

18. Rohrverbindungseinrichtung nach Anspruch 17,
*dadurch gekennzeichnet,* daß die Preßbacke (5) symmetrisch ausgebildet ist.
